Europäisches Patentamt

European Patent Office

Office européen des brevets

(11) Numéro de publication: **0 099 611**
**B1**

(12) **FASCICULE DE BREVET EUROPEEN**

(45) Date de publication du fascicule du brevet: **18.12.85**

(51) Int. Cl.⁴: **H 04 N 5/12**

(21) Numéro de dépôt: **83201065.6**

(22) Date de dépôt: **19.07.83**

(54) **Procédé pour engendrer un signal pour la commande de la déviation de trame dans un dispositif de reproduction d'images.**

(30) Priorité: **23.07.82 FR 8212875**

(43) Date de publication de la demande:
**01.02.84 Bulletin 84/05**

(45) Mention de la délivrance du brevet:
**18.12.85 Bulletin 85/51**

(84) Etats contractants désignés:
**BE DE FR GB IT**

(56) Documents cités:
**DE-A-2 905 809**
**FR-A-2 208 261**
**FR-A-2 336 840**
**US-A-4 228 461**

(73) Titulaire: **La Radiotechnique**
**51, rue Carnot**
**F-92150 Suresnes (FR)**
(84) **FR**

(73) Titulaire: **N.V. Philips' Gloeilampenfabrieken**
**Groenewoudseweg 1**
**NL-5621 BA Eindhoven (NL)**
(84) **BE DE GB IT**

(72) Inventeur: **DeCraemer, Alain**
**209, rue de l'Université**
**F-75007 Paris (FR)**
Inventeur: **Fougeron, Jean**
**209, rue de l'Université**
**F-75007 Paris (FR)**

(74) Mandataire: **Pinchon, Pierre et al**
**Société Civile S.P.I.D. 209 rue de L'Université**
**F-75007 Paris (FR)**

Courier Press, Leamington Spa, England.

## Description

L'invention concerne un procédé pour engendrer un signal pour la commande de la déviation de trame dans un dispositif de reproduction d'images, dans lequel on obtient des impulsions de trame par comptage de demi-lignes dans un compteur, une impulsion de comptage étant engendrée lors de l'apparition d'un compte prédéterminé de demi-lignes, dans lequel on vérifie s'il y a coïncidence entre la présence d'un chiffre de comptage prédéterminé dans le compteur et l'arrivée d'une impulsion de trame séparée qui est extraite d'un signal reçu par le dispositif de reproduction d'images, dans lequel on détermine pour la remise à zéro du compteur, selon qu'il y a coïncidence ou non pendant un certain nombre de trames, si le dispositif est dans un état de synchronisme pour lequel la coïncidence a été constatée un certain nombre de fois consécutives, ou de non-synchronisme dans le cas contraire, et dans lequel on utilise une mémoire pour enregistrer le nombre de demi-lignes comptées par le compteur, le signal pour la commande de la déviation de trame étant obtenu à partir du signal de remise à zéro du compteur.

La tendance actuelle en matière de circuits électroniques, et en particulier dans les dispositifs de reproduction d'images, par exemple les récepteurs de télévision, est de chercher à traiter numériquement le maximum de signaux, car cette technique permet d'éviter l'emploi de composants tels que des condensateurs ou des résistances de précision et, de ce fait, il devient possible d'intégrer des fonctions de plus en plus complètes sur une seule plaquette de semiconducteur, ce qui diminue la quantité d'interconnexions par circuit imprimé. Du fait de la suppression de composants coûteux et de la diminution des surfaces de circuit imprimé et du nombre de boîtiers de semiconducteurs, des économies très importantes peuvent être réalisées.

C'est en outre, dans le but supplémentaire d'améliorer l'insensibilité aux parasites de la synchronisation de trame qu'on a cherché à obtenir celle-ci au moyen d'un comptage de lignes.

Un certain nombre de réalisations ont vu le jour dans ce domaine, réalisations basées sur le même principe de base, consistant à engrendrer une impulsion de trame au moyen d'un compteur de lignes, pour un compte de lignes prédéterminé. Dans le cas du standard européen à 625 lignes, on engendre une impulsion toutes les 312.5 lignes, c'est-à-dire toutes les 625 demi-lignes, et on utilise cette impulsion à la place de la susdite impulsion séparée (synchronisation indirecte).

Un problème se pose alors si la fréquence n'est pas exactement celle prévue, par exemple lors de l'emploi d'un magnétoscope ou de certains générateurs de réglage: il faut que la synchronisation se produise quand même. Une solution simple consiste à venir en synchronisation directe tant que la fréquence n'est pas celle prévue. Toutefois, il es préférable que la synchronisation par comptage puisse être utilisée quel que soit le nombre de lignes par trame. C'est dans ce but qu'on utilise une mémoire pour y enregistrer le nombre de lignes par trame, nombre de lignes mesuré pendant une phase de synchronisation directe, aux fins de l'utiliser ensuite pour une synchronisation indirecte exploitant le compteur de demi-lignes. Cette technique offre en outre l'avantage qu'un seul type de circuit peut être utilisé quel que soit le standard d'émission (à 625 lignes ou à 525 lignes, par exemple).

Le document DE—A—29 05 809 décrit une réalisation de ce type. Le circuit de ce document utilise un compteur pour compter le nombre de demi-lignes apparaissant entre deux impulsions de trame séparées, et un autre compteur utilisant le nombre enregistré dans la mémoire pour produire des impulsions de synchronisation indirecte.

L'invention se propose de fournir un circuit du type mentionné, qui ne comporte qu'un seul compteur, ce qui permet une réalisation particulièrement simple et économique. Le concept inventif de l'invention repose sur l'idée d'utiliser un mode déterminé de remise à zéro du compteur et un mode déterminée de détection du synchronisme lorsqu'on est en état de synchronisme, et d'autres modes différents lorsque l'on est en état de non synchronisme. Il est alors possible qu'un seul compteur assure à lui seul les deux fonctions différentes précitées.

Un procédé selon l'invention est ainsi notamment remarquable en ce que lorsque l'état de non-synchronisme a été détecté, on enregistre dans la mémoiré à chaque arrivée d'une impulsion séparée le chiffre de comptage présent à cet instant en sortie du compteur, le compteur étant ensuite remis à zéro après un certain délai, alors que lorsque l'état de synchronisme a été détecté, on remet à zéro ce même compteur à l'instant où son chiffre de comptage devient égal à celui qui est inscrit dans la mémoire.

En outre, on considère, lorsque l'état de non-synchronisme a été détecté, qu'il y a coïncidence si l'impulsion séparée arrive alors que le chiffre de comptage du compteur est égal au chiffre contenu dans la mémoire, alors qu'au contraire on considère, lorsque l'état de synchronisme a été détecté, qu'il y a coïncidence si l'impulsion séparée arrive alors que le chiffre du compteur est égal à zéro.

Un moyen avantageux d'obtenir cela est caractérisé en ce que, dans l'état de non-synchronisme on commence par constater la coïncidence lorsque l'impulsion séparée se présente, ensuite on enregistre le chiffre du compteur dans la mémoire et, enfin, on remet à zéro le compteur, ces trois opérations étant effectuées en séquence à partir du début de l'impulsion séparée dans l'ordre indiqué et dans un délai inférieur à la durée d'une demi-ligne.

Avantageusement, le début de l'impulsion séparée déclenche l'inscription d'une éventuelle non-coïncidence dans un détecteur d'état, une transition d'un signal d'horloge se produisant après le début de l'impulsion déclenche l'enregistrement dans la mémoire et la fin de l'impulsion déclenche la remise à zéro du compteur.

Un circuit pour mettre en oeuvre ce procédé et qui comporte un compteur de demi-lignes, un détecteur d'état pour détecter une coïncidence entre une impulsion de trame séparée et une impulsion de comptage, et pour déterminer s'il y a état de synchronisme ou non, une mémoire pour enregistrer des chiffres de comptage du compteur, un circuit comparateur pour engendrer une impulsion lorsqu'il y a coïncidence entre le compte en sortie du compteur et la valeur de comptage enregistrée dans la mémoire, est remarquable en ce que le détecteur d'état comporte un circuit de mise en mémoire pour déclencher dans l'état de non-synchronisme l'enregistrement dans la mémoire de la valeur du compte en sortie du compteur, ce circuit ayant une première entrée au séparateur d'impulsions de trame, une deuxième entrée reliée à une horloge fournissant un signal d'horloge dont une transition est retardée par rapport au début de l'impulsion séparée et une sortie reliée à la mémoire, ainsi qu'un circuit d'aiguillage relié au moyen d'un dispositif à retard au séparateur d'impulsions pour fournir un signal à la fin de l'impulsion séparée et à l'entrée de remise à zéro du compteur pour remettre celui-ci à zéro dans l'état de non-synchronisme pendant l'apparition de ce signal.

Outre les avantages liés au procédé qu'il utilise, ce circuit qui est totalement universel et peut être utilisé sans modification ni ajout d'éléments extérieurs d'adaptation pour la plupart des standards existant dans le monde, comporte moins d'éléments que les circuits de l'art antérieur. Il peut de ce fait être fabriqué en grandes séries avec un prix de revient très compétitif.

La description qui va suivre en regard des dessins annexés, le tout donné à titre d'exemple, fera bien comprendre comment l'invention peut être réalisée:

La figure 1 est un schéma synoptique d'un récepteur de télévision muni du circuit pour mettre en oeuvre le procédé selon l'invention.

Les figures 2 et 3 montrent des détails du circuit de la figure 1, celui de la figure 3 étant connu en soi.

Les figures 4 et 5 illustrent l'allure de quelques signaux produits dans le circuit pour mettre en oeuvre le procédé selon l'invention.

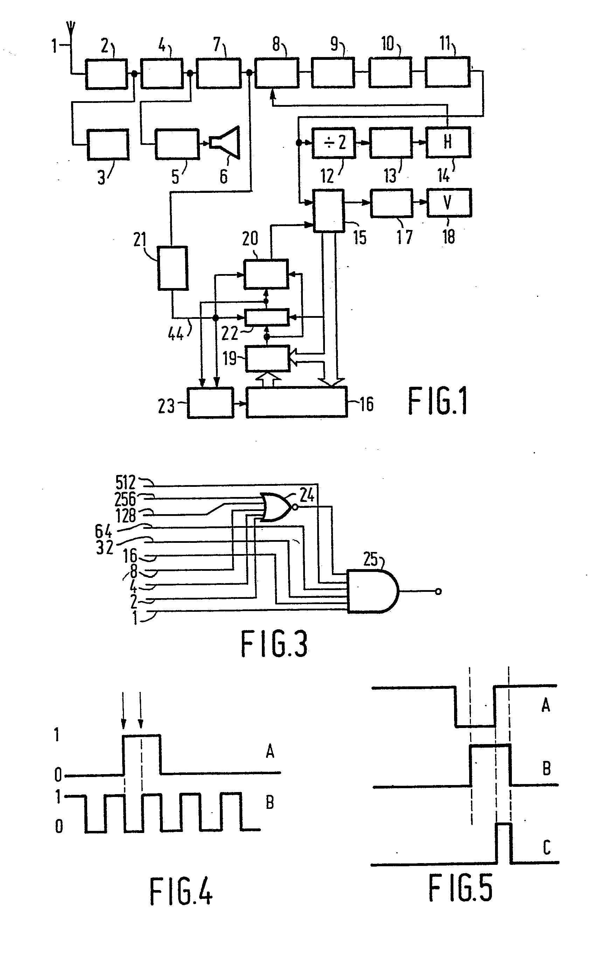

Sur la figure 1, une antenne 1 reçoit un signal de télévision et le fournit à une partie de détection haute fréquence 2. Ensuite, le signal détecté parvient d'une part à la partie son 3 du récepteur, et d'autre part à un amplificateur vidéo 4 dont la sortie fournit un signal vidéo composite. Ce signal est fourni à une partie 5 qui en extrait les composantes nécessaires à la commande d'un tube cathodique 6. Il est fourni aussi à un séparateur de synchronisation 7 qui fournit des impulsions de synchronisation de ligne à un détecteur de phase 8 dont la tension de sortie est à même d'influencer un oscillateur 11 par l'intermédiaire d'un filtre 9 et d'un circuit de réactance 10. L'oscillateur 11 engendre un signal dont la fréquence est égale au double de la fréquence de ligne, soit 2 $f_H$, c'est-à-dire 31.250 Hz lors de la réception d'un signal suivant le standard à 625 lignes par image complète à deux trames interlignées par image et 50 trames par seconde. Une autre possibilité est que l'oscillateur 11 engendre une tension à fréquence $f_H$, cette fréquence étant ensuite doublée. La tension à fréquence 2 $f_H$ commande un circuit de division de fréquence 12 dans lequel ladite fréquence est divisée par deux, le signal obtenu étant fourni à un étage de sortie lignes 14 par l'intermédiaire d'un étage de mise en forme d'impulsions 13. L'étage de sortie lignes 14 fournit le courant de déviation à une bobine de déviation horizontale (non représentée) et renvoie une impulsion de retour au détecteur de phase 8.

Tous ces circuits sont bien connus de l'homme de métier. Ils sont, ici, avantageusement réalisés selon des techniques de circuits numériques, au moins en ce qui concerne les éléments 8 à 13. En particulier, l'oscillateur 11 peut engendrer la fréquence 2 $f_H$ à partir d'un oscillateur à fréquence plus élevée, par exemple à 38 MHz, dont certains rapports de division fournissent des multiples entiers de la fréquence de ligne, et en particulier un signal d'horloge de période 842 ns dont on verra ci-dessous une utilisation.

Un circuit séparateur numérique de synchronisation de trame 21 permet d'extraire du signal de synchronisation reçu par l'antenne et séparé par le séparateur 7 l'impulsion de synchronisation de trame contenue dans ce signal. Le circuit séparateur 21 utilise le signal d'horloge fourni par l'oscillateur 11 et mentionné ci-dessus. Ce signal déclenche toutes les 842 ns l'entrée d'un échantillon du signal séparé dans l'entrée série d'un registre à décalage, par exemple à 24 bits. Les bits présents sur les sorties parallèles de ce registre constituent un mot. Lorsqu'il apparaît une impulsion de trame dans le signal séparé, ce mot a une configuration bien particulière, caractéristique de cette impulsion. Elle peut présenter par exemple 12 bits à 1 suivis de 12 bits à zéro. La détection de cette configuration au moyen d'un ensemble de portes déclenche le signal de trame séparé.

Ceci se produit pendant un seul cycle d'introduction des échantillons dans le registre et l'impulsion de trame séparée obtenue aura donc une durée théorique de 842 ns. Le détail des circuits du séparateur 21 n'a pas été représenté pour ne pas alourdir les figures, un tel séparateur est connu et peut être facilement réalisé par l'homme du métier. Il peut être réalisé de tout autre façon connue.

La synchronisation de trame est obtenu par comptage des impulsions à 2 $f_H$ dans un compteur binaire à 10 bits 15 relié à un circuit de mise en forme d'impulsions 17 et à un étage de sortie de trame 18 qui fournit le courant de déviation à une bobine de déviation verticale (non représentée).

Le circuit de synchronisation comporte un détecteur d'état 22 muni d'un détecteur de coïncidence qui détecte une coïncidence entre une impulsion de trame, extraite par le circuit séparateur 21 du signal reçu sur l'antenne 1 et prétraité par les circuits 2, 4, 7, et une impulsion 4 issue du compteur de lignes 15, impulsion correspondant à la remise à zéro du compteur. Le détecteur d'état 22 détermine, en fonction des coïncidences constatées, si le circuit de synchronisation est dans un état de synchronisme ou de non-synchronisme.

Ce circuit détecteur d'état, conne de l'art antérieur, vérifie en permanence la coïncidence entre l'impulsion de trame reçue et séparée et l'impulsion de comptage et enregistre les résultats durant plusieurs trames. Si plusieurs résultats identiques successifs sont trouvés, ils sont alors pris en compte et un signal de synchronisation ou de non-synchronisation est émis selon le cas. On attend la répétition du même résultat pendant un certain nombre de trames afin de ne pas prendre en compte un résultat accidentel, dû, par exemple, au bruit de fond.

Le circuit de la figure 1 comporte en outre:

— une mémoire 16 pour enregistrer une valeur de comptage issue de compteur 15,
— un circuit comparateur 19 pour engendrer une impulsion lorsqu'il y a coïncidence entre le compte en sortie du compteur 15 et la valeur de comptage enregistrée dans la mémoire 16,
— un circuit de mise en mémoire 23 pour déclencher l'enregistrement dans la mémoire 16 de la valeur du compte en sortie du compteur, lorsqu'il se présente une impulsion issue du séparateur 21 et que le détecteur d'état 22 indique l'état de "non-synchronisme",
— un circuit d'aiguillage 20 pour remettre à zéro le compteur immédiatement après l'enregistrement de la valeur de son compte dans la mémoire.

La remise à zéro du compteur 15 est effectuée de façon différente suivant que le circuit de synchronisation est en état synchronisé ou désynchronisé. C'est le circuit d'aiguillage 20 qui détermine le mode de remise à zéro: selon l'état qui est indiqué par le détecteur d'état 22, le circuit 20 transmet à l'entrée de remise à zéro du compteur 15 soit l'impulsion séparée issue du séparateur 21, soit une impulsion de comptage issue du comparateur 19.

Le circuit de synchronisation de la figure 1 fonctionne selon le procédé suivant: on obtient les impulsions par comptage dans le compteur 15, une impulsion dite "de comptage" étant engendrée lors de l'apparition d'un compte prédéterminée de demi-lignes. On vérifie dans le détecteur d'état 22 s'il y a coïncidence entre cette impulsion de comptage, engendrée lors de la remise à zéro du compteur, et une impulsion de trame en provenance du séparateur 21 et dont du signal reçu par l'antenne 1.

Selon qu'il y a coïncidence ou non pendant un certain nombre de trames, on choisit quelle impulsion sera utilisée pour la synchronisation: soit celle fournie par comptage du compteur 15 (synchronisation indirecte) soit celle fournie par le séparateur 21 (synchronisation directe). Au moyen du circuit détecteur d'état 22, on détecte s'il n'y a pas eu de coïncidence depuis un certain nombre de trames et, dans ce cas, on enregistre dans la mémoire 16 la valeur du compte de demi-lignes obtenu au moment où se produit l'impulsion du séparateur et et on remet ensuite le compteur à zéro à l'aide du circuit 20. Lorsqu'on a constaté un certain nombre de fois consécutives, toujours au moyen du circuit détecteur d'état 22, une coïncidence entre l'apparition en sortie du compteur 15 d'un compte égal à celui inscrit dans la mémoire 16 et d'une impulsion séparée, on choisit pour la synchronisation une impulsion engendrée par l'apparition (détectée au moyen du comparateur 19) d'un compte de demi-lignes à la sortie du compteur 15 égal au nombre inscrit dans la mémoire 16. Le comparateur de bits 19 déclenche la remise à zéro du compteur 15 et c'est cette mise à zéro du compteur qui engendre le signal de synchronisation de trame pour la déviation verticale.

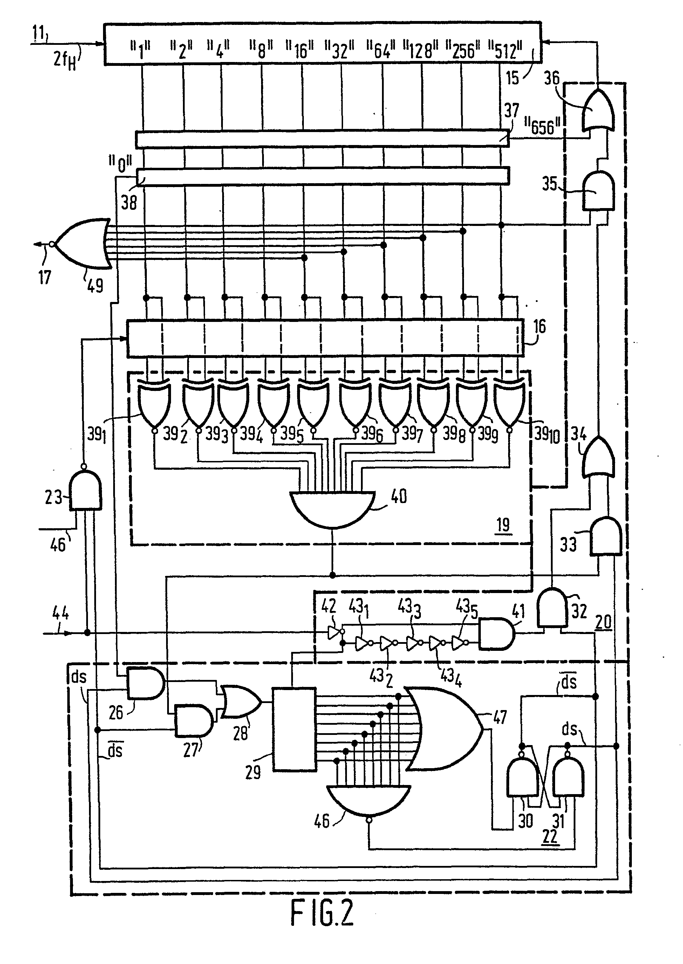

La figure 2 permet d'entrer plus dans les détails du fonctionnement en fournissant un exemple de schéma pour les circuits 19, 20, 22, 23. Cet exemple est destiné à une réalisation en technologie $I^2L$ et il va de soi que toutes autres combinaisons logiques équivalentes mieux adaptées à une autre technologie ne sortiraient pas du cadre de l'invention.

Le circuit 19 comporte 10 portes NON-OU exclusif $39_1$, $39_2$, - - - $39_{10}$. Chacune d'elles a une entrée reliée à une des 10 sorties de la mémoire 16 et une autre entrée est reliée à la sortie de même poids du compteur 15. La sortie de chaque porte 39 est reliée à l'entrée d'une porte ET 40.

Le circuit 20 comporte un inverseur 42 relié à l'entrée d'horloge d'un registre à décalage 29 faisant partie du détecteur d'état 22, à une entrée d'une porte ET 41 et à l'entrée d'une série d'inverseurs en cascade $43_1$, $43_2$, $43_3$, $43_4$ et $43_5$, dont le nombre est impair et dont la sortie est reliée à une autre entrée de la porte 41, la sortie de laquelle est reliée à l'entrée d'une porte ET 32 dont la sortie est reliée à l'entrée d'une porte OU 34. Une autre entrée de cette porte OU 34 est reliée à la sortie de la porte ET 33. Une entrée d'une porte ET 35 est reliée à la sortie de la porte 34. La Sortie de la porte 35 est reliée à une entrée d'une porte OU 36.

Le détecteur d'état 22 comportant deux portes ET 26, 27, la sortie de chacune étant reliée à une entrée différente d'une porte OU 28 dont la sortie est reliée à l'entrée de données du registre à décalage 29. Les 8 sorties de ce registre sont reliées à deux portes 46 et 47 ayant pour but de fournir un signal lorsque les 8 sorties sont toutes à un ou toutes à zéro, respectivement. 46 est une porte NON-ET, tandis que 47 est une porte OU, chacune de ces portes ayant huit entrées. Enfin, deux portes NON-ET 30 et 31 montées en couplage croisé constituent une bascule dont les entrées sont reliées l'une à la sortie de la porte 46 et l'autre à celle de la porte 47. Les deux sorties de la bascule 30, 31 fournissent deux signaux complémentaires ds et $\overline{ds}$.

Le circuit 23, enfin, est constitué d'une simple porte NON-ET à trois entrées.

Pour expliquer le fonctionnement des circuits de la figure 2, nous allons considérer deux cas selon que le circuit de synchronisation de trame est dans l'état synchronisé ou dans l'état non synchronisé.

Dans l'état synchronisé:

D'une manière qui sera expliquée plus loin, le détecteur d'état 22 fournit un 0 sur sa sortie $\overline{ds}$ et un 1 sur sa sortie ds. La sortie ds est reliée à une entrée de la porte 33 du circuit 20 dont l'autre entrée est reliée à la sortie de la porte 40 du circuit 19.

Lorsque le compteur 15 arrive à un compte égal à celui inscrit dans la mémoire 16, les portes $39_1$ à $39_{10}$, du circuit 19 ont chacune leurs deux entrées alimentées par deux signaux égaux et toutes les sorties passent à 1, entraînant donc à 1 celle de la porte 40. La porte 33 du circuit 20, qui a sont entrée "ds" à 1, transmet don ce 1 à la porte 34 qui le transmet elle-même à la porte 35. L'autre entrée de celle-ci est reliée à la sortie de poids 512 du compteur. Ceci est fait pour la sécurité des circuits de sortie 18 afin que le balayage ne puisse jamais être plus court que 512 demi-lignes. Supposons par exemple que le compte atteint est 625. Alors, un 1 est présent à la sortie de poids 512 du compteur et le signal issu de la porte 40 via les portes 33 et 34 peut encore franchir la porte 35 et, bien entendu, la porte 36 dont la sortie est reliée à l'entrée de remise à zéro du compteur 15. Celui-ci est remis à zéro par l'état 1 en sortie de la porte 36.

Cette remise à zéro s'est faite quasi instantanément dès que le compte 625 (ou n'importe quel autre, compris entre 512 et 656, a été atteint et dont le compte 625 n'est présent que pendant le temps très bref nécessaire à la remise à zéro. Sa durée n'est donc pas à prendre en compte dans le calcul du nombre de demi-lignes qui est ainsi égal à 625 en ajoutant la durée du compte zéro, égale à une demi-ligne. Une entrée de la porte 23 est reliée à la sortie $\overline{ds}$ et est donc à zéro, et cette porte est donc fermée. Il en est de même de la porte 32 du circuit 20.

La figure 3 représente un circuit connu pour détecter un compte en numérotation binaire. Cinq entrées d'une porte NON-OU 24 sont reliées aux bits de poids 2, 4, 8, 128, 256 et six entrées d'une porte ET 25 sont reliées aux bits de poids 1, 16, 32, 64, 512. Lorsque ces derniers sont à 1 et les précédents à zéro, la sortie de la porte 24 est à 1, toutes les entrées de la porte 25 aussi et un signal 1 est fourni à la sortie de la porte 25. Dans l'exemple donné ici, cela est obtenu pour un compte de 625 (soit 512+64+32+16+1 correspondant aux bits reliés à la porte 25). Il est facile à l'homme du métier d'imaginer d'autres circuits similaires pour détecteur n'importe quel compte. C'est ainsi que sur la figure 2, des éléments 37, 38 sont constitués de cette façon afin de détecter des comptes égaux respectivement à 656 et à zéro.

Le détecteur du compte zéro 38 fournit un signal 1, pendant les 32 µs que dure la demi-ligne numéro zéro, à une entrée de la porte 26 du détecteur 22. L'autre entrée de cette porte est reliée à ds=1; dont le signal de zéro franchit cette porte ainsi que la porte 28 et présente un 1 à l'entrée du registre 29. Si, à cet instant, un signal de trame reçu se présente sur un conducteur 44 relié à la sortie du séparateur 21 (figure 1), le signal à la sortie de 'inverseur 42 présente une transition de 1 vers 0 qui déclenche le décalage dans le registre et l'enregistrement d'un 1. Puisque le circuit de synchronisation est dans l'état synchronisé, ceci s'était déjà produit pendant des trames précédentes et le registre était rempli de un. Rien n'est dont changé, et le cycle peut se reproduire indéfiniment.

Un élément 49 fournit un signal lorsqu'aucun des bits de poids 16 à 512 n'est à 1. Cet élément est, par exemple, constitué d'une porte NON-OU à six entrées. Le signal sera donc fourni pour tous les comptes compris entre 0 et 15, c'est-à-dire pendant 16 demi-lignes, soit une durée de 512 µs. Ceci constitue une mise en forme de signal pour l'adapter à la commande de retour de trame dans les circuits de balayage 17, 18 (figure 1).

Dans l'état non synchronisé:

Supposons qu'un décalage de phase se produise par suite d'un changement de nombre de lignes par trame ou d'un changement de phase sans changement du nombre de lignes: le fonctionnement sera le même dans les deux cas. Le registre 29 enregistre un zéro car l'impulsion de coïncidence issue de la porte 40 n'est pas présente au moment où l'impulsion séparée est présente sur le conducteur 44.

Pour que la bascule 30, 31 change d'état, il est nécessaire que l'entrée de celle de ses portes dont la sortie est à 0 passe elle-même à zéro. Or, l'élément 46 est une porte NON-ET. La présence d'un seul zéro en sortie du registre 29 fait donc passer à 1 la sortie de la porte 46, mais ceci ne change pas l'état de la porte 31 qui a un zéro sur son autre entrée.

Quant à l'élément 47, qui est une porte OU, il a encore sept entrées à 1 et sa sortie ne change donc pas. La sortie "ds" de la bascule 30, 31 reste à 1 et les décalages du registre 29 continuent à être commandés toutes les 625 demi-lignes. De ce fait, des zéros vont continuer à entrer dans le registre 29 jusqu'au moment où celui-ci sera plein de zéros, c'est-à-dire au bout de huit trames non synchrones. Alors, la sortie de l'élément 47 passe à zéro et la bascule 30, 31 change d'état, ds=0 et $\overline{ds}$=1. La porte 33 est donc fermée et le signal issu de la porte 40 ne remet plus à zéro le compteur 15.

Par contre, la porte 23 dont une entrée est reliée à $\overline{ds}$ s'ouvre et ransmet l'impulsion séparée présente sur le conducteur 44 relié à une autre de ses entrées, à condition que sa troisième entrée 46 soit à 1. Cette entrée 46 est reliée au signal d'horloge de période 842 ns mentionné plus haut.

La figure 4 illustre de déroulement chronologique de l'ouverture de la porte 23. En A est représentée l'impulsion séparée présente sur l'entrée 44 et en B le signal de période 842 ns présent sur l'entrée 46. A la transition de 0 vers 1 du signal A, indiquée par la flèche de gauche, le signal B est à zéro. La porte ne s'ouvre donc pas. Ce n'est qu'à la transition de 0 vers 1 du signal B indiquée par la flèche de droite que la porte 23 s'ouvre. Sa sortie fournit alors une transition de 1 vers 0 qui déclenche l'écriture dans la mémoire 16 du compte présent à cet instant en sortie du compteur 15. Le décalage ainsi produit entre l'arrivée de l'impulsion séparée et l'écriture dans la mémoire a pour but qu'une non-coïncidence éventuelle puisse être enregistrée dans le registre 27 avant l'entrée dans la mémoire 16 de la valeur du compte: après cette entrée, ou aurait bien évidemment coïncidence entre le compteur et le contenu de la mémoire.

Cet enregistrement dans la mémoire étant le premier depuis qu'on a détecté le non-synchronisme, il se produit à un instant quelconque et l'enregistrement n'est pas significatif.

L'impulsion de trame séparée est également appliquée à l'inverseur 42. Le signal en sortie de cet inverseur et représenté en A sur la figure 5. Ce signal est retardé et inversé au moyen des inverseurs 43, le résultat en est représenté en B sur cette même figure 5. L'application des signaux A et B respectivement à chacune des entrées de la porte 41 engendre en sortie de celle-ci le signal C de la figure 5. Ce signal est transmis par la porte 32 dont l'autre entrée est reliée à $\overline{ds}$=1, puis par les portes 34, 35, 36 et remet à zéro le compteur 15 (si le compte est supérieur à 512).

Le rôle de l'ensemble 41, 42, 43 est d'obtenir que l'impulsion C se présente en retard par rapport à l'impulsion A au cours de laquelle ont été effectuées les opérations d'enregistrement de coïncidence et d'écriture dans la mémoire, décrites plus haut. (L'impulsion A de la figure 5 est la même que celle de la figure 4 A, mais inversée).

A l'arrivée d'une nouvelle impulsion séparée, le compteur 15, quie a été remis à zéro lors de la précédente impulsion, présente un compte correct. Ce dernier est enregistré dans la mémoire 16 par l'effet de la porte 23, ainsi qu'il a été expliqué plus haut, puis, avec un léger retard dû au circuit 41, 42, 43, le compteur 15 est à nouveau remis à zéro.

Lors de l'impulsion séparée suivante la mémoire 16 contenant la valeur correcte et le compteur 15 fournissant lui aussi cette valeur, la porte 40 fournit un signal de coïncidence et un 1 est enregistré dans le registre 29 par l'intermédiaire de la porte 27 dont l'entrée $\overline{ds}$ est à 1. Après huit trames ce registre sera donc à nouveau rempli de un et le circuit 46 fournira un zéro à la porte 31, faisant basculer la bascule 30, 31 qui fournira alors ds=1 et $\overline{ds}$=0.

Le système se retrouve ainsi dans l'état synchronisé décrit plus haut.

La porte 36 fournit un signal qui remet à zéro le compteur pour un compte 656, afin d'éviter qu'en l'absence d'impulsion séparée (dû par exemple à l'absence de réception) les circuits de balayage ne soient détériorés par une amplitude excessive.

Au cas où par hasard, au début de la période de non-synchronisme, l'impulsion séparée arriverait à un instant où le compte n'a pas atteint 512, la porte 35 interdirait le remise à zéro du compteur. Supposons que le nombre de demi-lignes par trame du signal séparé soit de 624 et que à l'instant en question le compte soit 511, ce qui est le pire cas. Le compteur sera remi à zéro de toute façon à 656. Le compte sera donc plus faible à l'arrivée de l'impulsion séparée suivante, puisque le compteur aura été remis à zéro à 656 au lieu de 624. Il aura diminué de 32. Au bout de 16 trames, l'impulsion séparée arrivera dans la fenêtre comprise entre les comptes 512 et 655 et le système se synchronisera comme indiqué ci-dessus.

Il est clair que la remise à zéro par l'impulsion séparée pendant la période transitoire de non-synchronisme a entraîné l'apparition d'une impulsion mise en forme en sortie de la porte 49 qui commande les circuits de balayage. Le système fonctionne donc en synchronisation directe par l'impulsion de trame séparée pendant cette période.

L'étage de sortie de trame 18 fournit un courant de déviation en dents de scie dont l'amplitude est en général fonction du temps de charge d'un condensateur faisant partie d'un circuit générateur de tension en dents de scie. Cette amplitude reste la même quel que soit le nombre de lignes par trame, à condition que la fréquence de trame soit maintenue constante. Dans le cas d'un circuit de synchronisation conçu dans le but d'une utilisation mixte "525 lignes à 60 Hz/625 lignes à 50 Hz", il est advantageux de fournir une donnée pour déterminer la valeur du courant de charge du condensateur précité en fonction de la valeur du nombre de lignes enregistré dans la mémoire 16. Dans so forme la plus simple, un tel circuit comprend un commutateur permettant l'ajustement du courant pour deux valeurs, la plus élevée de ces valeurs correspondant à la période la plus courte, c'est-à-dire pour 60 Hz, ce commutateur étant commandé par la sortie de poids 64 de la mémoire 16. Ceci permet l'ajustement de ce courant pour les standards à 525 et 625 lignes, puisque en numérotation binaire le bit de poids 64 est à 1 pour 625 lignes et à 0 pour 525 lignes. Dans une forme de réalisation plus sophistiquée destinée par exemple à un usage préférentiel en 50 Hz, un circuit analogue à celui représenté par la figure 3, dont les entrées sont connectées aux sorties de la mémoire 16, délivrant à l'étage 18 un signal seulement pour la valeur 525, permet de maintenir une valeur d'amplitude adaptée à une trame à 50 Hz dans tous les cas, sauf et uniquement pour une valeur de 525 lignes pour laquelle l'amplitude est réglée pour 60 Hz.

La forme de réalisation décrite ici en regard de la figure 2 constitue une des nombreuses variantes qui peuvent être imaginées sans sortir du cadre de l'invention.

Par exemple, le circuit de synchronisation décrit ici permet entre autres l'adaptation automatique aux deux standards les plus répandus dans le monde, à savoir ceux à 525 lignes et à 625 lignes. Au moyen d'une augmentation du nombre de bits du compteur et de la mémoire, assortie de l'adaptation correspondante du nombre de portes 39, du nombre d'entrées de la porte 40 et des circuits annexes tels que ceux référencés 37, 49, il serait possible pour l'homme du métier d'utiliser un circuit analogue dans les moniteurs à haute définition dont l'image comporte par exemple plus de 1023 lignes par trame.

Par ailleurs, d'autres méthodes connues de l'homme du métier pour extraire l'impulsion de trame du signal issu du séparateur de synchronisation 7 peuvent être utilisées. Il peut se faire alors que l'impulsion de trame obtenu soit beaucoup plus longue que dans l'exemple décrit ci-dessus. Au moyen d'un différentiation obtenue par exemple au moyen d'un circuit semblable à celui référencé 41, 43, le front avant de cette impulsion peut engendrer une impulsion plus courte, qui est utilisée alors comme dans l'exemple décrit ci-dessus. La durée maximale de cette impulsion est déterminée par le fait que le cycle d'opérations décrit plus haut doit être terminé (par la remise à zéro du compteur) avant l'apparition du compte suivant, c'est à dire dans la durée d'une demi-ligne. Au cas où une relation de phase précise entre le début de l'impulsion séparée et le signal de période 842 ns ne serait par assurée, ou bien si ce signal n'était pas disponible ou qu'on préfère ne pas l'utiliser, l'entrée 46 de la porte 23 peut être supprimée ainsi que le circuit 41, 42, 43 et alors la succession, dans l'ordre désiré, des opérations de contrôle de coïncidence, d'enregistrement dans la mémoire et de remise à zéro du compteur peut être obtenue par une série de bascules en cascade reliées, dans l'ordre des retards croissant, respectivement à l'entrée de décalage du registre 29, à une entrée de la porte 23, et à une entrée de la porte 32. On peut d'ailleurs aussi, dans tous les cas, supprimer la porte 41 à condition que le retard apporté par les inverseurs 43 soit supérieur à la largeur de l'impulsion de trame présente sur la connexion 44. Il est également possible de programmer le compteur 15 au moyen d'un micro-ordinateur qui remplace ainsi les parties 16, 19, 20, 22 et 23 du circuit de synchronisation de trame. Etant donnée la faible vitesse des opérations à effectuer, une telle réalisation ne présente pas de difficulté particulière.

### Revendications

1. Procédé pour engendrer un signal pour la commande de la déviation de trame dans un dispositif de reproduction d'images, dans lequel on obtient des impulsions de trame par comptage de demi-lignes dans un compteur (15), une impulsion de comptage étant engendrée lors de l'apparition d'un compte prédéterminé de demi-lignes, dans lequel on vérifie s'il y a coïncidence entre la présence d'un chiffre de comptage prédéterminé dans le compteur et l'arrivée d'une impulsion de trame séparée qui est extraite d'un signal reçu par le dispositif de reproduction d'images, dans lequel on détermine pour la remise à zéro du compteur, selon qu'il y a coïncidence ou non pendant un certain nombre de trames, si le dispositif est dans un état de synchronisme pour lequel la coïncidence a été constatée un certain nombre de fois consécutives, ou de non-synchronisme dans le cas contraire, et dans lequel on utilise une mémoire (16) pour enregistrer le nombre de demi-lignes comptées par le compteur, le signal pour la commande de la déviation de trame étant obtenu à partir du signal de remise à zéro du compteur, caractérisé en ce que lorsque l'état de non-synchronisme a été détecté, on enregistre dans la mémoire à chaque arrivée d'une impulsion séparée le chiffre de comptage présent à cet instant en sortie du compteur, le compteur étant ensuite remis à zéro après un certain délai, alors que lorsque l'état de synchronisme a été détecté, on remet à zéro ce même compteur à l'instant où son chiffre de comptage devient égal à celui qui est inscrit dans le mémoire.

2. Procédé selon la revendication 1, caractérisé en ce que l'on considère, lorsque l'état de non-synchronisme a été détecté, qu'il y a coïncidence si l'impulsion séparée arrive alors que le chiffre de comptage du compteur est égal au chiffre contenu dans la mémoire, alors qu'au contraire on considère, lorsque l'état de synchronisme a été détecté, qu'il y a coïncidence si l'impulsion séparée arrive alors que le chiffre du compteur est égal à zéro.

3. Procédé selon l'ensemble des revendications 1 et 2, caractérisé en ce que, dans l'état de non-synchronisme on commence par constater la coïncidence lorsque l'impulsion séparée se présente, ensuite on enregistre le chiffre du compteur dans la mémoire et, enfin, on remet à zéro le compteur, ces trois opérations étant effectuées en séquence à partir du début de l'impulsion séparée dans l'ordre indiqué et dans un délai inférieur à la durée d'une demi-ligne.

4. Procédé selon la revendication 3, caractérisé en ce que le début de l'impulsion séparée déclenche l'inscription d'une éventuelle non-coïncidence dans un détecteur d'état (22), une transition d'un signal d'horloge se produisant après le début de l'impulsion déclenche l'enregistrement dans la mémoire et la fin de l'impulsion déclenche la remise à zéro du compteur.

5. Circuit pour mettre en oeuvre le procédé selon l'une quelconque des revendications 1 à 4, comportant:

— un compteur de demi-lignes (15),
— un détecteur d'état (22) pour détecter une coïncidence entre une impulsion de trame séparée et une impulsion de comptage, et pour déterminer s'il y a état de synchronisme ou non,
— une mémoire (16) pour enregistrer des chiffres de comptage du compteur,
— un circuit comparateur (19) pour engendrer une impulsion lorsqu'il y a coïncidence entre le compte en sortie du compteur et la valeur de comptage enregistrée dans la mémoire,

caractérisé en ce que le détecteur d'état (22) comporte un circuit de mise en mémoire (23) pour déclencher dans l'état de non-synchronisme l'enregistrement dans la mémoire (16) de la valeur du compte en sortie du compteur, ce circuit ayant une première entrée reliée au séparateur d'impulsions de trame (21), une deuxième entrée reliée à une horloge fournissant un signal d'horloge dont une transition est retardée par rapport au début de l'impulsion séparée et une sortie reliée à la mémoire, ainsi qu'un circuit d'aiguillage (20) relié au moyen d'un dispositif à retard (43) au séparateur d'impulsions pour fournir un signal à la fin de l'impulsion séparée et à l'entrée de remise à zéro du compteur pour remettre celui-ci à zéro dans l'état de non-synchronisme pendant l'apparition de ce signal.

6. Circuit selon la revendication 5, caractérisé en ce que le détecteur d'état (22) comporte un registre à décalage (29) pour mémoriser des coïncidences successives, l'entrée d'horloge de ce registre étant reliée à la sortie du séparateur d'impulsion de trame, une première porte (27) ouverte dans l'état de non-synchronisme ayant une entrée reliée au circuit comparateur et une sortie reliée à l'entrée de données dudit registre à décalage, une deuxième porte ouverte (26) dans l'état de synchronisme ayant une entrée reliée à un circuit (38) fournissant une impulsion pour le chiffre zéro du compteur et un sortie reliée à l'entrée de données dudit registre à décalage, la sortie de celui-ci étant reliée à un élément bistable (30, 31) pour commander, selon que cet élément est dans l'un ou l'autre de ses états, l'entrée des données au registre de décalage et celle des signaux de remise à zéro du compteur, ainsi que la mise en action du circuit de mise en mémoire.

7. Circuit selon l'ensemble des revendications 5 et 6, caractérisé en ce que la première porte (27) ainsi qu'une troisième (23) et une quatrième (32) portes ont chacune une entrée reliée à une première sortie de l'élément bistable, la troisième porte (23) constituant le circuit de mise en mémoire et la quatrième porte (32) ayant une autre entrée reliée à la sortie du dispositif à retard (43) et une sortie reliée à l'entrée de remise à zéro du compteur, et en ce que la deuxième (26) et une cinquième portes (33) ont chacune une entrée reliée à une deuxième sortie, complémentaire de la première, de l'élément bistable, la cinquième porte (33) ayant une autre entrée reliée à la sortie du circuit comparateur et une sortie reliée à l'entrée de remise à zéro du compteur.

8. Circuit selon la revendication 5, caractérisé en ce qu'il comporte en outre un dispositif pour déterminer la valeur du courant de charge d'un condensateur, le courant de déviation engendré par l'étage de sortie de trame étant fonction de l'amplitude de la tension en dent de scie ainsi obtenue et la valeur du courant de charge précité étant fonction de la valeur du nombre de lignes enregistrée dans la mémoire.

9. Circuit selon la revendication 5, caractérisé en ce qu'il comporte une première porte (35) pour interdire la remise à zéro du compteur lorsque le compte de celui-ci n'a pas atteint une première valeur ainsi qu'une deuxième porte (36) pour remettre à zéro le compteur lorsque le compte de celui-ci a atteint une deuxième valeur, plus élevée que la première, en l'absence d'impulsion séparée.

10. Dispositif de reproduction d'images comportant un circuit pour engendrer un signal pour la commande de la déviation de trame selon l'une des revendications 5 à 9.

**Patentansprüche**

1. Verfahren zum Erzeugen eines Signals für die Steuerung der Vertikalablenkung in einer Bildwiedergabeanordnung, wobei Vertikal-Impulse durch Zählung von Halbzeilen in einem Zähler (15) erhalten werden, wobei ein Zählimpuls bei Auftritt einer vorbestimmten Zählung von Halbzeilen erzeugt wird, wobei überprüft wird, ob es zwischen dem Vorhandensein einer vorbestimmten Zählzahl in dem Zähler und dem Eintreffen eines abgetrennten Vertikal-Impulses, der von einem der Bildwiedergebeanordnung empfangenen Signal abgeleitet ist, Koinzidenz gibt, wobei für die Rückstellung auf Null des Zählers bestimmt wird, je nachdem es während einer bestimmten Anzahl von Teilbildern wohl oder nicht Koinzidenz gibt, ob die Anordnung sich in einem Synchron-Zustand, für den eine Anzahl Male hintereinander Koinzidenz festgestellt worden ist, oder im gegenüberliegenden Fall in einem Nicht-Synchron-Zustand befindet und wobei ein Speicher (16) verwendet wird zum Speichern der vom Zähler gezählten Anzahl Halbzeilen, wobei das Signal für die Steuerung der Vertikal-Ablenkung aus dem Nullrückstellsignal des Zählers erhalten wird, dadurch gekennzeichnet, dass, wenn der Nicht-Synchron-Zustand detektiert worden ist, bei jedem Eintreffen eines abgetrennten Impulses die Zählzahl, die zu diesem Zeitpunkt an dem Ausgang des Zählers vorhanden ist, in dem Speicher gespeichert wird, wobei der Zähler dann nach einer bestimmten Zeit auf Null rückgestellt wird, während, wenn der Synchron-Zustand detektiert worden ist, dieser Zähler zu dem Zeitpunkt, wo seine Zählzahl der in den Speicher eingeschriebenen Zahl entspricht, auf Null rückgestellt wird.

2. Verfahren nach Anspruch 1, dadurch gekennzeichnet, dass, wenn der Nicht-Synchron-Zustand detektiert worden ist, vorausgesetzt wird, dass es Koinzidenz gibt, wenn der abgetrennte Impuls eintrifft, während die Zählzahl des Zählers der in dem Speicher vorhandenen Zahl entspricht, während, wenn der Synchron-Zustand detektiert worden ist, dagegen vorausgesetzt wird, dass es Koinzidenz gibt, wenn der angetrennte Impuls eintrifft, während die Zahl des Zählers dem Wert Null entspricht.

3. Verfahren nach den beiden Ansprüchen 1 und 2, dadurch gekennzeichnet, dass in dem Nicht-Synchron-Zustand zunächst Koinzidenz festgestellt wird, wenn der abgetrennte Impuls eintrifft, dass danach die Zählzahl in dem Speicher gespeichert wird und zum Schluss der Zähler auf Null rückgestellt wird, wobei diese drei Vorgänge hintereinander vom Anfang des abgetrennten Impulses in der obenstehend angegebenen Reihenfolge und in einer Zeit kleiner als die Dauer einer halben Zeile durchgeführt werden.

4. Verfahren nach Anspruch 3, dadurch gekennzeichnet, dass der Anfang des abgetrennten Impulses das Einschreiben einer etwaigen Nicht-Koinzidenz in einen Zustandsdetektor (22) verursacht, wobei ein Taktimpulssignalübergang, der nach dem Anfang des Impulses erzeugt wird, das Einschreiben in den Speicher verursacht und das Ende des Impulses das Nullrückstellen des Zählers verursacht.

5. Schaltungsanordnung zum Durchführen des Verfahrens nach einem der Ansprüche 1 bis 4 mit:

— einem Halbzeilenzähler (15),
— einem Zustandsdetektor (22) zum Detektieren der Koinzidenz zwischen einem abgetrennten Vertikal-Impuls und einem Zählimpuls und zum Bestimmen, ob der Synchron-Zustand oder nicht vorliegt,
— einem Speicher (16) zum Speichern von Zählzahlen des Zählers,
— eine Vergleichsschaltung (19) zum Erzeugen eines Impulses, wenn es zwischen der Zählung an dem Ausgang des Zählers und dem in dem Speicher gespeicherten gezählten Wert Koinzidenz gibt, dadurch gekennzeichnet, dass der Zustandsdetektor (22) eine Speicherschreibeschaltung (23) aufweist zum in dem Nicht-Synchron-Zustand Einführen des Zählwertes an dem Ausgang des Zählers in den Speicher (16), wobei diese Schaltung einen ersten Eingang aufweist, der mit der Vertikal-Impulsabtrennschaltung (21) verbunden ist, sowie einen zweiten Eingang, der mit einem Taktimpulssignalerzeuger verbunden ist, der einen Taktimpuls erzeugt, von dem ein Übergang gegenüber dem Anfang des abgetrennten Impulses verzögert ist und einem mit dem Speicher verbundenen Ausgang ist, sowie eine Weichenschaltung (20), die über eine Verzögerungsanordnung (43) mit derm Vertikal-Impulsabtrennschaltung zum Liefern eines Signals an dem Ende des abgetrennten Impulses sowie mit dem Nullrückstelleingang des Zählers zum auf Null Rückstellen dieses Zählers in dem Nicht-Synchron-Zustand beim Auftritt diese Signals verbunden ist.

6. Schaltungsanordnung nach Anspruch 5, dadurch gekennzeichnet, dass der Zustandsdetektor (22) ein Schieberegister (29) zum Speichern aufeinanderfolgender Koinzidenzen aufweist, wobei der Taktimpulseingang dieses Registers mit dem Ausgang der Vertikal-Impulsabtrennschaltung verbunden ist, weitherhin eine erste Torschaltung (27), die in dem Nicht-Synchron-Zustand offen ist und einen Eingang aufweist, der mit der Vergleichsschaltung verbunden ist, sowie einen Ausgang, der mit dem Dateneingang des genannten Schieberegisters verbunden ist, sowie eine zweite Torschaltung (26), die in dem Synchron-Zustand offen ist und einen Eingang aufweist, der mit einer Schaltung (38) verbunden ist, die einen Impuls erzeugt für die Null-Zahl des Zählers und einen Ausgang, der mit dem Dateneingang des genannten Schieberegisters verbunden ist, wobei der Ausgang des Schieberegisters mit einem bistabilen Element (30, 31) verbunden ist zum Steuern der Eintritts der Daten in den Schieberegister und des Eintritt der Nullrückstellsignale des Zählers, je nachdem dieses Element sich in dem einen oder in dem anderen Zustand befindet, sowie zum Steuern des in Betriebsetzens der Speichereinschreibeschaltung.

7. Schaltungsanordnung nach den Ansprüchen 5 und 6, dadurch gekennzeichnet, dass die erste Torschaltung (27) sowie eine dritte (23) une eine vierte (32) Torschaltung je einen Eingang aufweisen, der mit einem ersten Ausgang des bistabilen Elementes verbunden ist, wobei die dritte Torschaltung (23) die Speichereinschreibeschaltung bildet und die vierte Torschaltung (32) einen weiteren Eingang aufweist, der mit dem Ausgang der Verzögerungsanordnung (43) verbunden ist, sowie einen Ausgang, der mit dem Nullrückstelleingang des Zählers verbunden ist, und dass die zweite (26) und eine fünfte Torschaltung (33) je einen Eingang aufweisen, der mit einem zweiten Ausgang des bistabilen Elementes verbunden ist, der zu dem ersten Ausgang komplementär ist, wobei die fünfte Torschaltung (33) einen weiteren Eingang aufweist, der mit dem Ausgang der Vergleichsschaltung verbunden ist, sowie einen Ausgang, der mit dem Nullrückstelleingang des Zählers verbunden ist.

8. Schaltungsanordnung nach Anspruch 5, dadurch gekennzeichnet, dass sie weiterhin eine Anordnung zum Bestimmen des Wertes des Ladestromes für einen Kondensator aufweist, wobei der von der Vertikal-Ausgangsstufe erzeugte Ablenkstrom eine Funktion der Amplitude der Sägezahnspannung ist, die auf diese Weiste erhalten ist, und der Wert des genannten Ladestromes eine Funktion des Wertes der in dem Speicher gespeicherten Zeilenzahl ist.

9. Schaltungsanordnung nach Anspruch 5, dadurch gekennzeichnet, dass sie eine erste Torschaltung (35) aufweist zum Sperren des Nullrückstellbetriebs des Zählers, wenn dessen Zählung einen ersten Wert nicht erreicht hat, sowie eine zweite Torschaltung (36) zum Nullrückstellen des Zählers, wenn dessen Zählung einen zweiten Wert erreicht hat, der höher ist als der erste Wert, dies beim Fehlen des abgetrennten Impulses.

10. Bildwiedergabeanordnung mit einer Schaltungsanordnung zum Erzeugen eines Signals für die Steuerung der Vertikalablenkung nach einem der Ansprüche 5 bis 9.

**Claims**

1. A method of generating a field deflection control signal in a picture display device, in which field pulses are obtained by means of counting half-lines in a counter (15), a counting pulse being generated as from the occurrence of a predetermined count of half-lines, in which it is checked whether there is coincidence between the presence of a predetermined counting figure in the counter and the arrival of a separated field pulse which is derived from a signal received by the picture display device, in which, depending on whether there is coincidence or no coincidence during a certain number of fields, it is determined for resetting the counter to zero, whether the device is in a synchronized state for which coincidence has been detected a certain number of times consecutively, or in a non-synchronized state in the opposite case, and in which a memory (16) is used to store the number of half-lines counted by the counter, the field deflection control signal being obtained from the reset-to-zero signal of the counter, characterized in that when the non-synchronized state has been detected, at each arrival of a separated pulse the counting figure present at the instant at the output of the counter is stored in the memory, the counter being thereafter reset to zero after a certain delay, whilst when the synchronized state has been detected this counter is reset to zero at the instant at which its counting figure becomes equal to the figure stored in the memory.

2. A method as claimed in Claim 1, characterized in that, when the non-synchronized state is detected, it is considered that there is coincidence when the separated pulse arrives whilst the counting figure of the counter is equal to the figure contained in the memory, whilst, when the synchronized state is detected, it is considered in contrast therewith that there is coincidence when the separated pulse arrives whilst the figure of the counter is equal to zero.

3. A method as claimed in both Claims 1 and 2, characterized in that, in the non-synchronized state, first coincidence is detected when the separated pulse occurs, that thereafter the counting figure is stored in the memory and, finally, the counter is reset to zero, these three operations being effected sequentially from the beginning of the separated pulse in the aboveindicated order and in a period of time less than the duration of a half-line.

4. A method as claimed in Claim 3, characterized in that the commencement of the separated pulse triggers the entering of any non-coincidence in a state detector (22), a clock signal transition produced after the commencement of the pulse triggers the entering into the memory and the end of the pulse triggers the reset-to-zero operation of the counter.

5. A circuit for putting into effect the method as claimed in any of the Claims 1 to 4, comprising:

— a half-line counter (15),
— a state detector (22) for detecting coincidence between a separated field pulse and a counting pulse, and for determining whether the synchronized state or the non-synchronized state is present,
— a memory (16) for storing the counting figures of the counter,
— a comparator circuit (19) for generating a pulse when there is coincidence between the count at the output of the counter and the counting value stored in the memory, characterized in that the state detector (22) comprises a memory write circuit (23) for enabling in the non-synchronized state entering the counting value at the output of the counter into the memory (16), this circuit having a first input connected to the field pulse separating circuit (21), a second input connected to a clock producing a clock signal a transition of which is delayed relative to the beginning of the separated pulse and an output connected to the memory, as well as a switching circuit (20) connected *via* a delay device (43) to the field pulse separating circuit for supplying a signal at the end of the separated pulse and to the reset-to-zero input of the counter for setting this counter to zero in the non-synchronized state during the occurrence of this signal.

6. A circuit as claimed in Claim 5, characterized in that the state detector (22) comprises a shift register (29) for storing successive coincidences, the clock input of this register being connected to the output of the field pulse separating circuit, a first gate (27) which is open in the non-synchronized state having an input connected to the comparator circuit and an output connected to the data input of said shift register, a second gate (26) which is open in the synchronized state having an input connected to a circuit (38) which produces a pulse for the zero figure of the counter and an output connected to the data input of said shift register, the output of the shift register being connected to a bi-stable element (30, 31) for switching, depending on whether this element is in one or the other of its states, the data input to the shift register and the reset-to-zero signal input of the counter, as well as putting the memory write circuit into operation.

7. A circuit as claimed in both Claims 5 and 6, characterized in that the first gate (27) and also a third (23) and a fourth (32) gates have each an input connected to a first output of the bi-stable element, the third gate (23) constituting the memory write circuit and the fourth gate (32) having a further input connected to the output of the delay device (43) and an output connected to the reset-to-zero input of the counter, and in that the second (26) and a fifth gates (33) each have an input connected to a second output, which is complementary to the first output, of the bi-stable element, the fifth gate (33) having a further input connected to the output of the comparator circuit and an output connected to the reset-to-zero input of the counter.

8. A circuit as claimed in Claim 5, characterized in that it further comprises a device for determining the value of the charging current for a capacitor, the deflection current generated by the field output stage being a function of the amplitude of the sawtooth voltage thus obtained and the value of said charging current being a function of the value of the line number stored in the memory.

9. A circuit as claimed in Claim 5, characterized in that it comprises a first gate (35) for inhibiting the reset-to-zero operation of the counter when its count has not reached a first value, and also a second gate (36) for resetting the counter to zero when its count has reached a second value which is higher than the first value, in the absence of the separated pulse.

10. A picture display device comprising a circuit for generating a field deflecting control signal as claimed in any of the Claims 5 to 9.

FIG.1

FIG.3

FIG.4

FIG.5

FIG.2

0 099 611

2